# EUROPÄISCHE PATENTSCHRIFT

(11) **EP 1 328 394 B1**
(45) Veröffentlichungstag und Bekanntmachung des Hinweises auf die Patenterteilung: **29.12.2004**
(21) Anmeldenummer: 01982395.4
(22) Anmeldetag: 04.10.2001
(51) Int. Cl.: B29C 47/10, B29C 47/50, B29B 7/82

(54) **MISCHVORRICHTUNG UND VERFAHREN ZUR HERSTELLUNG VON THERMOPLASTISCH VERARBEITBAREN FORMMASSEN, INSBESONDERE ADDITIVBATCHES**
MIXING DEVICE AND METHODS FOR PRODUCING THERMOPLASTICALLY PROCESSABLE MOULDING MATERIALS, ESPECIALLY ADDITIVE BATCHES
DISPOSITIF MELANGEUR ET PROCEDES DE PRODUCTION DE MATIERES DE MOULAGE POUVANT ETRE TRAITES PAR VOIE THERMOPLASTIQUE, NOTAMMENT MELANGES D'ADDITIFS

(30) Priorität: 06.10.2000 DE 10050023
(43) Veröffentlichungstag der Anmeldung: 23.07.2003
(73) Patentinhaber: BASF AKTIENGESELLSCHAFT, 67056 Ludwigshafen (DE)
(72) Erfinder: GÜNTHERBERG, Norbert, D-67346 Speyer (DE); HOFMANN, Jürgen, D-67069 Ludwigshafen (DE); MAILAHN, Elmar, D-67547 Worms (DE); OHLIG, Hilmar, D-67657 Kaiserslautern (DE)
(86) Internationale Anmeldenummer: PCT/EP2001/011457
(87) Internationale Veröffentlichungsnummer: WO 2002/028618

(56) Entgegenhaltungen:
- EP-A- 0 911 359
- WO-A-00/27216
- DE-A- 2 239 672
- DE-A- 3 509 134
- DE-A- 4 111 739
- US-A- 4 547 541
- PATENT ABSTRACTS OF JAPAN vol. 012, no. 487 (M-778), 20. Dezember 1988 (1988-12-20) -& JP 63 207627 A (FURUKAWA ELECTRIC CO LTD:THE), 29. August 1988 (1988-08-29) -& DATABASE WPI Week 8840 Derwent Publications Ltd., London, GB; AN 1988-282627 XP002189167 & JP 63 207627 A
- PATENT ABSTRACTS OF JAPAN vol. 010, no. 273 (M-518), 17. September 1986 (1986-09-17) -& JP 61 095923 A (JAPAN STEEL WORKS LTD:THE), 14. Mai 1986 (1986-05-14) -& DATABASE WPI Week 8926 Derwent Publications Ltd., London, GB; AN 1986-164547 XP002189168 & JP 61 095923 A

## Beschreibung

Die vorliegende Erfindung betrifft eine Mischvorrichtung gemäß dem Anspruch 1.

Weiterhin betrifft die vorliegende Erfindung die Verwendung der Mischvorrichtung zur Herstellung thermoplastisch verarbeitbarer Formmassen, insbesondere sogenannter "Additivbatches".

Des weiteren betrifft die Erfindung Verfahren zur Herstellung thermoplastisch verarbeitbarer Formmassen, insbesondere Additivbatches, gemäß dem Anspruch 7.

Organische Polymere, beispielsweise Thermoplaste, werden in der Regel im Verlauf mindestens einer Verarbeitungsstufe mit Additiven versehen. Bei diesen Additiven handelt es sich beispielsweise um Stabilisatoren gegen oxidativen Abbau, der durch Licht oder Wärme initiiert sein kann, um Säurefänger, die durch Katalysatorrückstände hervorgerufene Säurerückstände neutralisieren, um Farbstoffe, Flammschutzmittel, Gleitmittel, Antistatika oder dergleichen.

Um den oftmals nachteiligen Umgang mit reinen Additiven bei der Additivierung von thermoplastisch verarbeitbaren Polymeren zu vermeiden, werden oftmals sogenannte "Additivbatches" eingesetzt. Bei diesen Additivbatches handelt es sich um spezielle Formmassen, bei denen die benötigten Additive in einer Matrix aus beispielsweise thermoplastischem Polymer eingebettet sind, wobei jedoch der Additivgehalt im Vergleich zu üblichen additivierten Formmassen deutlich höher liegt. Durch Zugabe entsprechender Mengen eines Additivbatches zu einem beispielsweise nicht-additivierten Thermoplasten werden dann Formmassen mit üblichen Additivgehalten hergestellt.

Die üblicherweise zur Herstellung von additivierten thermoplastisch verarbeitbaren Formmassen oder Additivbatches geeigneten Mischvorrichtungen und Verfahren sind dem Fachmann bekannt (siehe beispielsweise Saechtling, Kunststoff-Taschenbuch, Hanser Verlag, München, Wien, Ausgabe 26, 1995, Seiten 191 bis 246).

Die genannten Additive liegen bei Raumtemperatur meist in Pulverform oder flüssig vor. Der Einsatz dieser Additive in Pulverform ist bei der Einarbeitung in die thermoplastisch verarbeitbare Komponente unter Verwendung der bekannten Mischvorrichtungen und Verfahren mit Nachteilen verbunden.

Es bilden sich beispielsweise Stäube, die unter Umständen gesundheitsschädlich sein können oder Staubexplosionen verursachen können.

Grundsätzlich kann die Einarbeitung von pulverförmigen Additiven in thermoplastisch verarbeitbare Komponenten, insbesondere zur Herstellung von Additivbatches, auch problematisch sein, wenn der Schmelzpunkt mindestens einer Additivkomponente weit unterhalb, beispielsweise 50°C unterhalb, der Temperatur liegt, die den Warmformbereich der Thermoplastmatrix nach unten begrenzt, beispielsweise ca. 110°C. Allgemein können schon Additive mit einem Schmelzpunkt von ca. 150°C kritisch sein, wenn die Temperatur, die den Warmformbereich der Thermoplastmatrix nach unten begrenzt, entsprechend hoch ist, beispielsweise ca. 200°C. Besonders problematisch ist die Einarbeitung, wenn der Schmelzpunkt eines Additivs ca. 50 bis 350°C unter der Verarbeitungstemperatur der thermoplastisch verarbeitbaren Komponente liegt. Beispielsweise ist die Einarbeitung besonders kritisch, wenn der Schmelzpunkt des Additivs im Bereich oder nur wenig oberhalb der Umgebungstemperatur der Verarbeitungsmaschinen liegen, beispielsweise zwischen ca. Raumtemperatur und 60°C. Die Probleme, die in diesen Fällen auftreten können, sind: ein vorzeitiges Aufschmelzen des Additivs schon in dessen Dosiervorrichtung, wodurch beispielsweise ein zum Einarbeiten mit einem Extruder nötiger Druckaufbau nicht mehr erreicht werden kann; die Bildung von Verklebungen und Verbackungen des Additivs; ungleichmäßige oder falsche Dosierung des Additivs; nicht-homogene Verteilung des Additivs in der thermoplastisch verarbeitbaren Komponente beispielsweise aufgrund großer Viskositätsunterschiede zwischen thermoplastischer Komponente und als niederviskoser Schmelze vorliegendem Additiv; Zersetzung oder Verfärbung des Additivs in festem oder geschmolzenem Zustand aufgrund zu hoher thermischer Belastung, oftmals unter Einwirkung von Luftsauerstoff.

Eine Möglichkeit der Einarbeitung solcher Additivkomponenten in die Thermoplastmatrix ist die Flüssigdosierung des Additivs bei einer Temperatur oberhalb dessen Schmelztemperatur. Dieses Vorgehen setzt jedoch die thermische Beständigkeit des Additivs oberhalb seiner Schmelztemperatur voraus. Ist diese Beständigkeit nicht ausreichend gegeben, können beispielsweise Zersetzung des Additivs und Verfärbung der thermoplastisch verarbeitbaren Formmassen die Folge sein. Außerdem ist man bei einer Flüssigdosierung auf den Einsatz einer zwangsfördernden Pumpe als Dosiervorrichtung beschränkt, da beispielsweise mit einem Extruder kein zur Dosierung nötiger Druckaufbau mehr erreichbar ist.

EP 565 184 A1 beschreibt Verfahren, in denen mittels Feststoffmischern bzw. Extrudern mehrere Additivkomponenten zu granularen Kompaktaten geformt werden, welche dann in thermoplastische Polymere eingearbeitet werden können. Diese rein durch mechanischen Druck auf die Pulverkomponenten hergestellten Kompaktate sind meist wenig beständig gegen mechanischen Abrieb, weshalb die Gefahr der Staubbildung nicht ausgeschlossen werden kann. Außerdem neigen solche Kompaktate besonders bei warmer Umgebungstemperatur zur Verklebung und Verbackung, wenn sie niedrigschmelzende Komponenten enthalten.

WO 98/13412 und EP-A 534 235 offenbaren jeweils Mischvorrichtungen, die aus einem Haupt- und einem Seitenextruder bestehen, und die zur Herstellung von schlagzäh modifizierten Thermoplasten ausgehend von mindestens einer wasserhaltigen Komponente verwendet werden. Solche Vorrichtungen haben für die Herstellung von Additivbatches, bei denen als Additiv mindestens eine Komponente eingesetzt wird, deren Schmelztemperatur weit unterhalb der Temperatur liegt, die den Warmformbereich der Thermoplastmatrix nach unten begrenzt, oder deren Schmelzpunkt im Bereich oder nur wenig oberhalb der Umgebungstemperatur der Verarbeitungsmaschinen liegt, beispielsweise zwischen ca. Raumtemperatur und 60°C, den Nachteil, daß es im Bereich der Eindosierung von Additiv in die Thermoplastmatrix zu Verklebungen und ungleichmäßigen Dosierungen kommen kann. Es können in diesen Fällen keine homogenen thermoplastisch verarbeitbaren Formmassen erhalten werden.

JP-A-61 095923 offenbart eine Vorrichtung zum Dosieren eines Additivs in einen Extruder unter gleichzeitigerKühlung der Zufuhrleitung.

US-A-4 547 541 beschreibt ein Verfahren zur Herstellung von thermoplastischen Polymermischungen.

Der vorliegenden Erfindung lag die Aufgabe zugrunde, Vorrichtungen und Verfahren zur Herstellung homogener thermoplastisch verarbeitbarer Formmassen, insbesondere Additivbatches, aus mindestens einer thermoplastischen Komponente und mindestens einer weiteren Komponente zur Verfügung zu stellen, wobei die Schmelzoder Zersetzungstemperatur der weiteren Komponente weit unterhalb , beispielsweise ca. 50°C unterhalb, der Temperatur liegt, die den Warmformbereich der thermoplastischen Komponente nach unten begrenzt, beispielsweise ca. 110°C, bzw. die Schmelz- oder Zersetzungstemperatur der weiteren Komponente ca. 50 bis 350°C unter der Verarbeitungstemperatur der thermoplastischen Komponente liegt, bzw. die Schmelz- oder Zersetzungstemperatur der weiteren Komponente im Bereich oder nur wenig oberhalb der Umgebungstemperatur der Verarbeitungsmaschinen liegt, beispielsweise zwischen ca. Raumtemperatur und 60°C, bei denen die oben genannten Probleme nicht auftreten.

Diese Aufgabe wird von den eingangs definierten Mischvorrichtungen und Verfahren, die im folgenden näher beschrieben sind, erfüllt.

Die erfindungsgemäße Mischvorrichtung besteht mindestens aus einer Schneckenmaschine S1 und einer Schneckenmaschine S2. Prinzipiell kann die Mischvorrichtung auch aus mehr als den genannten Schneckenmaschinen aufgebaut sein.

Unter Schneckenmaschinen sind generell alle Apparate zu verstehen, die mit schnecken-, schrauben- oder wendelartigen Fördereinrichtungen oder mit diesen Fördereinrichtungen gleichwirkenden Fördereinrichtungen versehenen sind, und die zur Verarbeitung von festen, plastisch verformbaren oder flüssigen Stoffen geeignet sind. Beispielsweise sind als Schneckenmaschinen Schneckenkneter, Plastifikatoren, Ko-Kneter, Knetmischer, Scherwalzenextruder oder Schneckenextruder geeignet. Schneckenextruder sind bevorzugt, Doppelschneckenextruder sind besonders bevorzugt. Geeignete Schneckenmaschinen sind beispielsweise in Saechtling, Kunststoff-Taschenbuch, Hanser Verlag, München, Wien, Ausgabe 26, 1995, Seiten 191 bis 246, beschrieben.

Schneckenmaschinen weisen üblicherweise Abschnitte unterschiedlicher Funktion, sogenannte "Zonen" auf. Die unterschiedlichen Zonen der Schneckenmaschinen sind nicht notwendigerweise identisch mit den einzelnen Bauteilen wie Gehäuseteilen oder Schnekkensegmenten, aus denen die Schneckenmaschinen, beispielsweise Extruder, montiert sind. Eine Zone besteht in der Regel aus mehreren Bauteilen. Die einzelnen Zonen können je nach Funktion unterschiedliche räumliche Ausdehnungen, beispielsweise unterschiedliche Längen oder Volumina, haben.

Üblicherweise weisen Schneckenmaschinen eine oder mehrere der im folgenden beschriebenen Zonen auf. Darüberhinaus können Schnekkenmaschinen aber auch Zonen aufweisen, deren Funktion im folgenden nicht explizit beschrieben wird.

Unter Dosierzone ist der Abschnitt einer Schneckenmaschine zu verstehen, in der eine oder mehrere Komponenten, beispielsweise ein thermoplastisch verarbeitbares Polymer, der Schneckenmaschine zugeführt wird. Diese Zuführung kann mit einer Dosiereinrichtung erfolgen, die beispielsweise aus einer obenliegenden Öffnung in der Schneckenmaschine mit aufgesetztem Trichter besteht, so daß die zu dosierende Komponente durch Schwerkraft in die Schneckenmaschine gelangt. Die Dosiereinrichtung kann aber auch beispielsweise aus einer Förderschnecke oder einem Extruder bestehen, durch die die zu dosierende Komponente durch die Dosieröffnung der Schneckenmaschine gedrückt wird. Geeignete Extruder für Dosierzwecke sind beispielsweise Zweischneckenextruder mit kämmenden, gegenläufigen Schnecken. Für flüssige Komponenten sind auch Pumpen als Dosiereinrichtung geeignet. Die Dosiereinrichtungen arbeiten meist automatisch. Enthält die Dosierzone mehrere Dosieröffnungen, so können diese z.B. hintereinander entlang einer gedachten Achse in Längsrichtung der Schneckenmaschine, kreisförmig entlang des Umfanges der Schneckenmaschine oder entlang einer imaginären Helix um die Schneckenmaschine herum angeordnet sein.

Unter Plastifizierzone ist der Abschnitt einer Schneckenmaschine zu verstehen, in dem eine Komponente in einen warmformbaren, meist schmelzflüssigen oder plastisch verformbaren, Zustand gebracht wird. In der Regel wird dies durch Beheizen oder mechanisch eingebrachte Energie erreicht. Zum Einbringen mechanischer Energie kommen als Plastifizierungselemente die dem Fachmann geläufigen Bauteile in Betracht, beispielsweise Schneckenelemente mit geringer Steigung in Förderrichtung, Knetblöcke mit schmalen oder breiten, fördernden oder nichtfördernden Knetscheiben, Schneckenelemente mit einer Steigung entgegen der Förderrichtung, oder eine Kombination solcher Elemente. Die Auswahl der Plastifizierungselemente in der Plastifizierzone richtet sich hinsichtlich ihrer Art, Anzahl und Dimensionierung nach den Komponenten der Polymermischung, insbesondere nach der Viskosität und Erweichungstemperatur sowie der Mischbarkeit der Komponenten.

Unter Homogenisierzone ist der Abschnitt einer Schneckenmaschine zu verstehen, in dem eine oder mehrere Komponenten, von denen mindestens eine im warmformbaren Zustand ist, homogenisiert werden. Diese Homogenisierung erfolgt meist durch Mischen, Kneten oder Scheren. Geeignete Misch-, Knet- und Scherelemente sind beispielsweise die bereits als Plastifizierungselemente beschriebenen Mittel.

Unter Ausstoßzone ist der Abschnitt einer Schneckenmaschine zu verstehen, in dem der Austrag der thermoplastisch verarbeitbaren Formmasse, beispielsweise des Additivbatches, aus der Schneckenmaschine vorbereitet und durch die Austrittsöffnung durchgeführt wird. Die Ausstoßzone besteht meist aus einer Förderschnecke und einem geschlossenen Gehäuseteil, das mit einer definierten Austrittsöffnung abgeschlossen ist.

Bevorzugt wird als Austrittsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich.

In einer besonderen Ausführungsform wird statt der oben beschriebenen Düsenleiste mit der sonst üblichen Kombination aus Strangabzug, Wasserbad und Granulator ein besonderer Düsenkopf mit anschließender Unterwassergranulierung eingesetzt. Hierbei tritt das flüssige oder plastische Material durch eine Düsenplatte mit bevorzugt kreisförmig angeordneten runden Bohrungen, wird unter Wasser von rotierenden Messern abgetrennt und unter Wasser abgekühlt, wobei das Material zu mehr oder weniger runden, perlförmigen Körnern erstarrt. Bei der Anordnung der Bohrungen sind jedoch auch andere als kreisförmige Anordnungen und andere als runde Lochformen gebräuchlich.

In einer weiteren Ausführungsform wird statt des Austrags über Düsenleiste, Wasserbadkühlung und Granulierung ein Heißabschlagsverfahren eingesetzt, wobei das aus dem Düsenkopf austretende flüssige oder plastische Material nicht durch Flüssigkeit gekühlt, sondern nach Austritt aus dem Düsenkopf nach kurzer Luftkühlung noch im heißen Zustand zerkleinert (granuliert) wird. Das entstehende Granulat wird danach weiter gekühlt oder kühlt bei der Weiterverarbeitung ab, sofern dies notwendig ist.

Additivbatches werden bevorzugt als Granulat hergestellt. Sofern die thermoplastisch verarbeitbare Formmasse kein Additivbatch ist, sondern in diesem Verarbeitungsstadium bereits alle Zusätze und Additive in der für die gewünschte Endanwendung geeigneten Menge enthält, ist auch die Weiterverarbeitung im heißen Zustand oder die Direktextrusion von Platten, Folien, Rohren und Profilen vorteilhaft.

In einer weiteren besonderen Ausführungsform ist die Ausstoßzone mit einer Vorrichtung zur Filtration des aus der Schneckenmaschine austretenden flüssigen oder plastischen Materials versehen, die sich vor dem Düsenkopf befindet. Derartige Vorrichtungen zur kontinuierlichen Schmelzefiltration sind dem Fachmann bekannt und handelsüblich. Man kann, falls notwendig, zwischen Ausstoßzone und Schmelzefiltration ein Förderorgan installieren, beispielsweise eine Schmelzepumpe oder einen Schneckenförderer, um in der Schmelze den zum Passieren der Filtereinheit notwendigen Druck aufzubauen.

Die aus der Filtrationsvorrichtung austretende flüssige oder plastische Material wird granuliert bzw. auf andere Art weiterverarbeitet, wie es bereits beschrieben wurde.

Eine Schneckenmaschine kann darüberhinaus weitere Zonen enthalten, beispielsweise Entlüftungs- oder Entgasungszonen zum Abführen gasförmiger Bestandteile oder Abquetsch- und Entwässerungszonen zum Abtrennen und Austragen flüssiger Bestandteil, bei denen es sich um Wasser, aber auch um andere Stoffe handeln kann. Entgasungs-, Abquetsch- und Entwässerungszonen sowie deren apparative Ausführung und Anordnung sind in WO 98/13412 beschrieben, weshalb bezüglich dieser Merkmale ausdrücklich auf die genannte Schrift verwiesen wird.

Ein Abschnitt einer Schneckenmaschine kann auch zwei oder mehr der genannten Zonen vereinigen. Wird beispielsweise in die Homogenisierzone eines Extruders ein weiterer Stoff zudosiert, so fungiert die Homogenisierzone gleichzeitig als Dosierzone. In analoger Weise können die anderen der genannten Zonen in einem Abschnitt der Schneckenmaschine gleichzeitig realisiert sein.

Die einzelnen Zonen können räumlich voneinander klar abgrenzbar sein oder kontinuierlich ineinander übergehen. So ist beispielsweise bei einem Extruder der Übergang von der Plastifizierzone in die Homogenisierzone räumlich nicht immer klar abgrenzbar. Es findet oftmals ein kontinuierlicher Übergang zwischen den beiden Zonen statt.

Wie allgemein bekannt ist, können die verschiedenen Zonen einer Schneckenmaschine, beispielsweise eines Extruders, individuell geheizt oder gekühlt werden, um entlang der Förderrichtung ein optimales Temperaturprofil einzustellen. Geeignete Heiz- und Kühleinrichtungen sind dem Fachmann bekannt. Beispielhaft seien als Heizeinrichtungen genannt: Direktbefeuerung, elektrische Heizbänder, von wärmeübertragenden Medien wie Wasser, Silikonölen, Paraffinen oder ähnlichen zur Wärmeübertragung geeigneten organischen Verbindungen, anorganischen Salzschmelzen wie beispielsweise Natriumnitrat-/Kaliumnitratmischungen oder niedrig schmelzenden Metallegierungen oder auch Gasen, beispielsweise Wasserdampf, durchströmte Heizrohre oder Heizmäntel. Elektrische Beheizung oder durchströmte Heizmäntel oder -rohre sind bevorzugt.

Beispiele für geeignete Kühleinrichtungen sind: Luftkühlung, Peltierelemente, von zur Wärmeabführung geeigneten Medien wie Wasser, Salzlösungen, Solen oder tiefschmelzenden organischen Verbindungen durchströmte Kühlrohre oder Kühlmäntel. Durchströmte Kühlrohre oder Kühlmäntel sind bevorzugt.

Die im Einzelfall zu wählenden Temperaturen und räumlichen Abmessungen der einzelnen Zonen unterscheiden sich in Abhängigkeit der chemischen und physikalischen Eigenschaften der Komponenten und deren Mengenverhältnissen.

Die Schneckenmaschine S1 weist erfindungsgemäß mindestens eine Dosierzone, mindestens eine Plastifizierzone und mindestens eine Homogenisierzone auf.

Die Schneckenmaschine S1 ist wenigstens in der Plastifizier- und Homogenisierzone mit Heizeinrichtungen versehenen. Auch andere Zonen von S1, beispielsweise Dosier-, Ausstoß- oder Entgasungszonen können beheizt sein. Bevorzugt ist die Ausstoßzone mit einer Heizeinrichtung versehen. Zonen von S1, die nicht Plastifizieroder Homogenisierzone sind, können auch mit Kühleinrichtungen versehen sein. Bevorzugt ist die Dosierzone von S1 mit einer Kühleinrichtung versehen.

Die Schneckenmaschine S2 besitzt üblicherweise mindestens eine Dosierzone. In einer bevorzugten Ausführungsform ist die Dosierzone von S2 mit einer Entgasungsöffnung versehen.

Die Schneckenmaschine S2 kann mit oder ohne Heiz- oder Kühleinrichtungen ausgeführt sein. Bevorzugt ist S2 in einer, mehreren oder allen Zonen mit einer Kühlvorrichtung versehen.

Bei der erfindungsgemäßen Mischvorrichtung ist die Austrittsöffnung von S2 in der Plastifizier- oder Homogenisierzone von S1 mit dem Schneckenzylinder von S1 verbunden. Bevorzugt erfolgt die Verbindung in der Homogenisierzone von S1. Wesentlich ist, daß die Verbindung von S1 und S2 durch eine Verbindungsvorrichtung erfolgt, die mit einer bis zur Innenwandung des Schneckenzylinders von S1 wirkenden Kühleinrichtung versehen ist.

Unter Schneckenzylinder ist der Raum innerhalb der Schneckenmaschine zu verstehen, in dem die Schneckenelemente rotieren, beziehungsweise in dem das zu verarbeitende Material transportiert wird. Die Innenwandung des Schneckenzylinders ist die Wandung des Gehäuses der Schneckenmaschine, die mit dem zu verarbeitenden Material in Kontakt steht.

Bei der Verbindungsvorrichtung kann es sich um ein separates Bauteil, beispielsweise einen Übergabestutzen, handeln. Im Sinne der Erfindung sind unter dem Begriff "Verbindungsvorrichtung" aber auch an S1 fest angebrachte Vorrichtungen, beispielsweise Flansche oder Schraubverbindungen, zu verstehen, an die S2 direkt angeschlossen werden kann. In diesen Fällen sind die an S1 fest angebrachten verbindungsvorrichtungen und/oder die Schneckenmaschine S2 selbst mit einer Kühleinrichtung versehen, die bis zur Innenwandung des Schneckenzylinders von S1 wirkt, beispielsweise einem ganz- oder teilgekühltem Gehäuseschuß.

Für die Kühlung der Verbindungsvorrichtung sind ebenfalls die genannten Kühleinrichtungen geeignet.

Die Temperatur von S1, mit Ausnahme der Dosierzone von S1, wählt man in der Regel so, daß sie deutlich oberhalb der Temperatur liegt, die den Warmformbereich der in S1 zu verarbeitenden thermoplastisch verformbaren Komponente nach unten begrenzt. In der Regel bedeutet dies, daß die Temperatur von S1, mit Ausnahme der Dosierzone von S1, gleich oder höher ist als die Erweichungstemperatur des zu verarbeitenden Thermoplasten. Bevorzugt wählt man dabei Temperaturen von mindestens 50°C, besonders bevorzugt mindestens 60°C, oberhalb der Erweichungstemperatur. Diese und die im folgenden genannten Temperaturangaben für Schneckenmaschinen beziehen sich jeweils auf die Temperatur, die die einsatzstoffoder produktberührenden Teile der Schneckenmaschine, beispielsweise die Innenwandung des Schneckenzylinders eines Extruders, haben. Die Obergrenze des Temperaturbereiches richtet sich nach der Beschaffenheit der eingesetzten thermoplastisch verarbeitbaren Komponenten sowie optional weiterer vorhandener Komponenten. Man bevorzugt dabei Temperaturen, bei denen keine Schädigung der Komponenten auftritt. Im allgemeinen wählt man Temperaturen im Bereich von 150°C bis 400°C, bevorzugt 160°C bis 350°C. Die Dbsierzone von S1 wird in der Regel bei einer Temperatur gehalten, die unter der Schmelz- oder Erweichungstemperatur der dosierten Stoffe liegt, um ein Anbacken in dieser Zone zu verhindern.

Die Temperatur der Schneckenmaschine S2 und/oder der Verbindungsvorrichtung wählt man üblicherweise so, daß die Ausstoßtemperatur der in S2 verarbeiteten Komponenten so niedrig ist, daß diese Komponenten zum überwiegenden Anteil in fester Form aus S2 ausgestoßen werden. Dabei führt man S2 im allgemeinen keine Wärme von außen zu, sondern kühlt vorzugsweise nach an sich bekannten oder den genannten Methoden derart, daß der Schneckenzylinder von S2 und/oder die Verbindungsvorrichtung unter die Schmelztemperatur der zu dosierenden Komponente abgekühlt werden, beispielsweise auf Raumtemperatur.

Eine wesentliche Eigenschaft der erfindungsgemäßen Mischvorrichtung ist, daß die Verbindung von S1 und S2 durch eine Verbindungsvorrichtung erfolgt, die mit einer bis zur Innenwandung des Schneckenzylinders von S1 wirkenden Kühleinrichtung versehen ist. Erfindungsgemäß ist die Verbindungsvorrichtung ca. 50°C bis 350°C kälter als die Innenwandung des Schneckenzylinders von S1 im Bereich der Verbindungsstelle. Beispielsweise weist die Verbindungsvorrichtung eine Temperatur von nicht mehr als ca. 60°C, bevorzugt nicht mehr als 50°C, besonders bevorzugt nicht mehr als 30°C auf, während die Innenwandung des Schneckenzylinders von S1 im Bereich der Verbindungsstelle eine Temperatur von mehr als ca. 110°C, bevorzugt mehr als 130°C, besonders bevorzugt mehr als 150°C aufweist. Die im Einzelfall zu wählenden Temperaturen richten sich nach den zu mischenden Komponenten K1 und K2.

Weiterhin ist eine wesentliche Eigenschaft der erfindungsgemäßen Mischvorrichtung, daß S2 eine Schnecke besitzt, die im Übergang von S2 zu S1 einen Druck aufbaut, der genügend hoch ist, um gegen den Druck von S1 zu fördern. So kann beispielsweise die Schnecke von S2 im Übergang von S2 zu S1 eingängig und/oder mit enger werdenden Schneckengängen versehen sein.

In einer bevorzugten Ausführungsform werden als Schneckenmaschinen S1 ein sogenannter Hauptextruder und als Schneckenmaschine S2 ein sogenannter Seitenextruder eingesetzt.

Die erfindungsgemäße Anordnung jedes einzelnen Extruders kann kostensparend unter Hilfenahme von marktüblichen Extruderbauteilen nach dem Baukastenprinzip aufgebaut werden. Solche Bauteile sind in Form unterschiedlich ausgestalteter Schnecken- und zugehörigen Gehäuseabschnitten, sogenannten "Schüssen", verfügbar und ermöglichen eine genaue Anpassung des Extruders an das spezielle Konfektionierungsproblem.

Als Haupt- und/oder Seitenextruder kann man Einschneckenextruder oder Doppelschneckenextruder, die gleichsinnig drehend und ineinandergreifend, als auch gegenläufig kämmend sowie nicht kämmend sein können, verwenden. Bevorzugt werden als Haupt- und/oder Seitenextruder Doppelschneckenextruder eingesetzt. Besonders bevorzugt sind gleichsinnig drehende, kämmende Doppelschneckenextruder.

Im Bereich der Dosierzonen und - sofern vorhanden - in Entlüftungs- oder Entgasungszonen sind die Extruderschnecken des Haupt- und/oder Seitenextruders in der Regel als normal-fördernde Schnecken ausgebildet. Der Seitenextruder ist bevorzugt in allen Zonen mit normal-fördernden Schnecken ausgerüstet. Normal-fördernde Schnecken im Sinne dieser Anmeldung bestehen überwiegend aus Elementen mit "Erdmenger"-Profil (vollständig selbstreinigend), Schubkantenelementen, Elementen mit Trapezprofil, Elementen mit Rechteckprofil oder Kombination dieser Elemente. Die Entgasungsöffnungen vorhandener Entgasungszonen kann man im Bedarfsfall auch mit den in der Praxis üblichen Stopfschnecken versehen, jedoch ist dies in der Regel nicht notwendig.

In einer bevorzugten Ausführungsform ist der Hauptextruder ein in der Plastifizier- und Homogenisierzone überwiegend mit Knet-, Misch- und Scherelementen versehener Schneckenextruder. Die entsprechenden Knet-, Misch- und Scherelemente wählt man je nach dem rheologischen Verhalten der thermoplastischen und anderen Komponenten. Geeignete Misch-, Knet und Scherelemente wurden bereits beschrieben.

Es können Haupt- und/oder Seitenextruder mit Schnecken mit kleiner, mittlerer oder großer Gangtiefe (sog. "tiefgeschnittene Schnecken") verwendet werden. Die Gangtiefe der einzusetzenden Schnecken ist maschinentypabhängig. Der jeweils einzusetzende Maschinentyp richtet sich nach der jeweiligen Aufgabe.

Die Gangzahl der Schnecken des Haupt- und/oder Seitenextruders kann variieren. Bevorzugt werden für den Seitenextruder im Übergang zum Hauptextruder eingängige Schnecken eingesetzt. Ansonsten werden zweigängige Schnecken bevorzugt verwendet. Jedoch können auch Schnecken mit anderen Gangzahlen, beispielsweise eingängige oder dreigängige, eingesetzt werden, oder solche Schnecken, die Abschnitte mit unterschiedlichen Gangzahlen aufweisen.

Die Schneckendrehzahlen des Haupt- und/oder Seitenextruders können innerhalb eines weiten Bereiches variieren. Bevorzugt werden relativ hohe Drehzahlen verwendet. Geeignete Drehzahlen der Schnecken des Haupt- und/oder Seitenextruders liegen unabhängig voneinander im Bereich von 50 bis 1200 U/min⁻¹, bevorzugt von 100 bis 1000 U/min⁻¹, besonders bevorzugt 400 bis 900 U/min⁻¹.

In einer bevorzugten Ausführungsform besteht die erfindungsgemäße Mischvorrichtung aus einem Haupt- und einem Seitenextruder, wobei der Hauptextruder eine mittels Wasserkühlung auf ca. Raumtemperatur gekühlte Dosierzone und auf 150°C bis 400°C beheizte Plastifizier-, Homogenisier und Ausstoßzonen aufweist und mit einer mit 50 U/min bis 1200 U/min gleichsinnig rotierenden Doppelschnecke bestückt ist. Die Doppelschnecke des Hauptextruders ist zweigängig ausgeführt und in der Dosier- und Ausstoßzone mit normal-fördernden, in der Plastifizier- und Homogenisierzone mit Misch-, Knet- und/oder Scherelementen versehen. Bevorzugt im Bereich der Homogenisierzone des Hauptextruders ist ein Seitenextruder mit seiner Austrittsöffnung an den Schneckenzylinder des Hauptextruders angeschlossen. Die Verbindung des Seitenextruders und des Hauptextruders erfolgt durch einen Übergabestutzen, der mit einer bis zur Innenwandung des Schneckenzylinders des Hauptextruders wirkenden Wasserkühlung versehen ist, so daß der Übergabestutzen im Bereich der Verbindungsstelle zum Hauptextruder 50°C bis 350°C kalter ist als die Innenwandung des Schneckenzylinders des Hauptextruders im Bereich der Verbindungsstelle. Der Seitenextruder ist bevorzugt vollständig wassergekühlt, beispielsweise auf Raumtemperatur. Der Seitenextruder ist vorteilhaft mit einer mit 50 U/min bis 1200 U/min gleichsinnig rotierenden Doppelschnecke bestückt, die im Übergang vom Seiten- zum Hauptextruder einen Druck aufbaut, der genügend hoch ist, um gegen den Schmelzedruck des Hauptextruders zu fördern. Bevorzugt ist die Doppelschnecke des Seitenextruders im Übergang zum Hauptextruder eingängig, in den anderen Bereichen zweigängig, ausgeführt und mit normal-fördernden Schneckenelementen versehen.

Die erfindungsgemäßen Mischvorrichtungen sind zur Herstellung thermoplastisch verarbeitbarer Formmassen, insbesondere sogenannter Additivbatches, geeignet. Sie sind besonders gut zur Herstellung thermoplastisch verarbeitbarer Formmassen, insbesondere Additivbatches, aus mindestens einer thermoplastischen Komponente K1 und mindestens einer Komponente K2 geeignet, wobei die Schmelz- oder Zersetzungstemperatur T_{S}^{K2} der Komponente K2 weit unterhalb, beispielsweise ca. 50°C unterhalb, der Temperatur T_{W}^{K1} liegt, die den Warmformbereich der thermoplastischen Komponente nach unten begrenzt, beispielsweise ca. 110°C, bzw. wobei T_{S}^{K2} ca. 50 bis 350°C unter der Verarbeitungstemperatur von K1 liegt, bzw. wobei T_{S}^{K2} im Bereich oder nur wenig oberhalb der Umgebungstemperatur der Verarbeitungsmaschinen liegt, beispielsweise zwischen ca. Raumtemperatur und 60°C.

Im folgenden werden die erfindungsgemäßen Verfahren zur Herstellung thermoplastisch verarbeitbarer Formmassen, insbesondere Additivbatches, aus mindestens einer thermoplastischen Komponente K1 und mindestens einer Komponente K2 beschrieben, wobei die Schmelz- oder Zersetzungstemperatur T_{S}^{K2} der Komponente K2 weit unterhalb, beispielsweise ca. 50°C unterhalb, der Temperatur T_{W}^{K1} liegt, die den Warmformbereich der thermoplastischen Komponente nach unten begrenzt, beispielsweise ca. 110°C, bzw. wobei T_{S}^{K2} ca. 50 bis 350°C unter der Verarbeitungstemperatur von K1 liegt, bzw. wobei T_{S}^{K2} im Bereich oder nur wenig oberhalb der Umgebungstemperatur der Verarbeitungsmaschinen liegt, beispielsweise zwischen ca. Raumtemperatur und 60°C. Bei den erfindungsgemäßen Verfahren wird K1 auf eine Temperatur größer als T_{W}^{K1} erwärmt, die Komponente K2 mittels einer auf eine Temperatur kleiner als T_{S}^{K2} gekühlten Dosiervorrichtung zudosiert, eine Vermischung der Komponenten K1 und K2 durchgeführt und die erhaltene thermoplastisch verarbeitbare Formmasse bzw. der Additivbatch nach einem optional durchführbaren Formgebungsprozeß wieder auf eine Temperatur kleiner als T_{W}^{K1} abgekühlt, wobei wesentlich ist, daß K2 zum überwiegenden Anteil erst nach dem Kontakt mit K1 schmilzt.

Als thermoplastische Komponente K1 sind prinzipiell alle thermoplastisch verarbeitbaren Stoffe geeignet.

Beispielhaft seien amorphe oder teilkristalline thermoplastische Polymere genannt, u.a. auch Polyolefine wie Polyethylen niedriger oder hoher Dichte, Polypropylen, Polyolefino- oder -blockpolymere, Polyolefinwachse, Polycarbonate, Polyalkylenterephthalate wie Polybutylenterephthalat und Polyethylenterephthalat, biologisch abbaubare Polymere, beispielsweise Polylactid, Polycaprolacton oder aliphatisch-aromatische Copolyester aus beispielsweise Terephthalsäure, Adipinsäure und Butandiol, Polyoxymethylen, Polymethylmethacrylat, Polyphenylensulfid, Polysulfone, Polyethersulfone, Polyketone und Polyamide sowie Mischungen dieser Thermoplasten. Außerdem können auch thermoplastische Elastomere wie thermoplastisches Polyurethan (TPU) als Komponente K1 verwendet werden.

Im allgemeinen sind amorphe Polymere bevorzugt. Beispielhaft seien genannt: Polymethylmethacrylat; Copolymere aus Methylmethacrylat und homologe C₂-C₈-Alkylester der (Meth)acrylsäure; Copolymere aus Styrol und Acrylnitril (SAN-Polymere) sowie aus Styrol und Methylmethacrylat, Maleinsäureanhydrid, α-Methylstyrol, kernalkylierten und kernchlorierten Styrolen sowie Butadien, beispielsweise Styrol-Butadien-Copolymere oder Styrol-Butadien-Blockcopolymere; Polystyrol; Polyvinylchlorid; Copolymere von Vinylchlorid mit Vinylidenchlorid, Propylen und Vinylestern; bevorzugt sind Polymethylmethacrylat und SAN-Polymere sowie Polystyrol und dessen Copolymere.

Ebenso kann man als Komponente K1 Copolymere auf Basis von Styrol/Maleinsäureanhydrid, Styrol/imidiertem Maleinsäureanhydrid, Styrol/Maleinsäureanhydrid/imidiertem Maleinsäureanhydrid, Styrol/Methylmethacrylat/imidiertem Maleinsäureanhydrid, Styrol/ Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem Polymethylmethacrylat oder Mischungen dieser Polymere verwenden.

Bei allen genannten thermoplastischen Komponenten K1 kann das Styrol ganz oder teilweise durch α-Methylstyrol, oder durch kernalkylierte Styrole, oder durch Acrylnitril ersetzt sein. Von den zuletzt genannten Komponenten K1 sind solche auf Basis von α-Methylstyrol/Acrylnitril, Styrol/Maleinsäureanhydrid, Styrol/Methylmethacrylat und Copolymere mit imidiertem Maleinsäureanhydrid bevorzugt.

K1 kann auch ein Gemisch mehrerer thermoplastisch verarbeitbarer Stoffe sein. K1 kann auch ein Gemisch aus mindestens einem thermoplastisch verarbeitbarem Stoff und einem oder mehreren Stoffen sein, die als solche nicht thermoplastisch verarbeitbar sind, wenn das Gemisch all dieser Stoffe thermoplastisch verarbeitbar ist.

So werden beispielsweise bei der Herstellung von Arzneimitteln, Pflanzenbehandlungsmitteln, Futtermitteln und/oder Nahrungsmitteln durch Schmelzextrusion als polymere Bindemittel Polymere, Copolymere, Cellulosederivate, Saccharose, Stärke, Stärkederivate, modifizierte Stärke oder Mischungen der genannten Stoffgruppen als Komponente K1 eingesetzt, beispielsweise Polyvinylpyrrolidon (PVP), Copolymerisate von N-Vinylpyrrolidon (NVP) und vinylacetat oder Vinylpropionat, Copolymerisate von Vinylacetat und Crotonsäure, teilverseiftes Polyvinylacetat, Polyvinylalkohol, Polyhydroxyalkylacrylate, Polyhydroxyalkylmethacrylate, Polyacrylate und Polymethacrylate (Eudragit-Typen), Copolymerisate von Methylmethacrylat und Acrylsäure, Polyacrylamide, Polyethylenglykole, Polyvinylformamid (gegebenenfalls partiell oder vollständig hydrolysiert), wasserquellbare Polyurethane mit einer Glasübergangstemperatur Tg > 20°C, Celluloseester, Celluloseether, insbesondere Methylcellulose und Ethylcellulose, Hydroxyalkylcellulosen, insbesondere Hydroxypropylcellulose, Hydroxyalkyl-Alkylcellulosen, insbesondere Hydroxypropyl-Ethylcellulose, Cellulosephthalate, insbesondere Celluloseacetatphthalat und Hydroxypropylmethylcellulosephthalat, und Mannane, insbesondere Galactomannane. Davon sind Polyvinylpyrrolidon, Copolymerisate von N-Vinylpyrrolidon und Vinylestern, Polyhydroxyalkylacrylate, Polyhydroxyalkylmethacrylate, Polyacrylate, Polymethacrylate, Alkylcellulosen und Hydroxyalkylcellulosen besonders bevorzugt.

Das polymere Bindemittel erweicht oder schmilzt in der Gesamtmischung aller Komponenten üblicherweise unter 180 °C, vorzugsweise unter 130 °C, wobei sich ein plastisches Gemisch bildet. Erforderlichenfalls wird die Erweichungs- oder Schmelztemperatur durch übliche, beispielsweise pharmakologisch akzeptable weichmachende Hilfsstoffe herabgesetzt. In diese als polymere Bindemittel wirkende Komponente K1 werden beispielsweise niedrigschmelzende oder thermisch empfindliche Wirkstoffe, beispielsweise pharmazeutische Wirkstoffe, Enzyme oder Vitamine eingearbeitet.

Die Herstellung der genannten Komponenten K1 ist dem Fachmann bekannt oder kann nach an sich bekannten Methoden erfolgen.

Der sogenannte Warmformbereich eines thermoplastischen Stoffes ist der Temperaturbereich, innerhalb dessen eine thermoplastische Verarbeitung möglich ist. Im Idealfall kann für die Temperatur, die den Warmformbereich nach unten begrenzt eine exakt definierte Temperatur angegeben werden (beispielsweise die Schmelztemperatur einer Verbindung). Meist ist der Warmformbereich jedoch nicht durch exakt definierte Temperaturgrenzen charakterisierbar. Vielmehr ist beispielsweise beim Erwärmen eines Thermoplasten ein kontinuierlicher Übergang vom festen in den plastischen, d.h. warm-verformbaren, Zustand zu beobachten. Im Sinne der Erfindung ist unter der Temperatur T_{W}^{K1}, die den Warmformbereich von K1 nach unten begrenzt, die Temperatur oder der Temperaturbereich zu verstehen, innerhalb dessen der Übergang vom beispielsweise festen, nicht-warmformbaren in den plastischen Warmformbereich stattfindet. Nach oben wird der Warmformbereich eines thermoplasischen Stoffes meist durch die Temperatur begrenzt, bei der noch keine nennenswerte Zersetzung, Abbau, Verfärbung o.ä. zu beobachten sind. Auch hier ist es meist nicht möglich, eine exakte Temperatur anzugeben; vielmehr gibt es Temperaturbereiche innerhalb derer eine Warmverformbarkeit, beispielsweise jeweils in Abhängigkeit von mechanischer Belastung oder Verarbeitungszeit, gerade noch möglich ist, ohne daß negative Effekte aufgrund der Temperatur zu beobachten sind.

So liegt beispielsweise die Temperatur T_{W}^{K1} bei teilkristallinen Thermoplasten in der Nähe der Schmelztemperatur der Kristallite. Beispielsweise liegt die Schmelztemperatur der Kristallite von Polyethylen hoher Dichte bei ca. 130 bis 146°C, der Warmformbereich für Polyethylen hoher Dichte liegt üblicherweise im Bereich von ca. 120 bis 300°C. Für weitere Beispiele dieser Art wird auf Franck/Biederbick, Kunststoff-Kompendium, Vogel Buchverlag Würzburg, 2. Auflage 1988, Seiten 252-256, verwiesen.

Bei amorphen Thermoplasten liegt im allgemeinen die Temperatur T_{W}^{K1} wenig oberhalb deren Glasübergangstemperatur T_{g}. Beispielsweise liegt die Glasübergangstemperatur von Styrol-Acrylnitril-Copolymeren (SAN) bei ca. 106°C, der Warmformbereich für SAN liegt üblicherweise im Bereich von ca. 110 bis >300°C. Für weitere Beispiele dieser Art wird auf Franck/Biederbick, Kunststoff-Kompendium, Vogel Buchverlag Würzburg, 2. Auflage 1988, Seiten 263-266, verwiesen.

Als Komponente K2 sind beispielsweise die bei der Polymerverarbeitung üblichen Additive und Hilfsmittel geeignet, deren Temperatur T_{S}^{K2} weit unterhalb, beispielsweise ca. 50°C unterhalb, der Temperatur T_{W}^{K1} liegt, die den Warmformbereich der thermoplastischen Komponente nach unten begrenzt, beispielsweise ca. 110°C, bzw. deren Temperatur T_{S}^{K2} ca. 50 bis 350°C unter der Verarbeitungstemperatur von K1 liegt, bzw. deren Temperatur T_{S}^{K2} im Bereich oder nur wenig oberhalb der Umgebungstemperatur der Verarbeitungsmaschinen liegt, beispielsweise zwischen ca. Raumtemperatur und 60°C. Auch Mischungen mehrerer dieser Stoffe sind geeignet.

Als Komponente K2 sind beispielsweise Verbindungen geeignet, die den folgenden Verbindungsklassen angehören:
- primäre Antioxidantien, wie sterisch gehinderte Phenole;
- sekundäre Antioxidantien, wie Phosphite, Phosphonite, Thioester;
- organische oder anorganische Säurefänger;
- Lichtschutz-Additive, wie UV-Absorber und sterisch gehinderte Amine.

Gebräuchliche primäre Antioxidantien sind beispielsweise sterisch gehinderte Phenole, wie Tetrakis[3-(3,5-di-t-butyl-4-hydroxyphenyl)propionyloxymethyl]methan sowohl in amorpher als auch kristalliner Form, Octadecyl-3-(3',5'-di-t-butyl-4'-hydroxyphenyl)propionat, 1,3,5-Tris(3,5-di-t-butyl-4-hydroxybenzyl)isocyanurat, (1,3,5-Trimethyl-2,4,6-tris(3,5-di-t-butyl-4-hydroxybenzyl)benzol) und butylierte Reaktionsprodukte aus p-Kresol und Dicyclopentadien.

Als amorphes Tetrakis[3-(3,5-di-t-butyl-4-hydroxyphenyl)propionyloxymethyl]methan sei beispielsweise das Produkt der Fa. EniChem Synthesis mit dem Handelsnamen Anox 20 AM genannt.

Als kristallines Tetrakis[3-(3,5-di-t-butyl-4-hydroxyphenyl)propionyloxymethyl]methan sei beispielsweise das Produkt der Fa. EniChem Synthesis mit dem Handelsnamen Anox 20 oder Irganox 1010 der Fa. Ciba-Geigy genannt.

Ein Octadecyl-3-(3',5'-di-t-butyl-4'-hydroxyphenyl)propionat, welches eingesetzt werden kann, ist beispielsweise das Verkaufsprodukt Anox PP18 der Fa. EniChem Synthesis oder Irganox 1076 der Fa. Ciba-Geigy.

Ein 1,3,5-Tris(3,5-di-t-butyl-4-hydroxybenzyl)isocyanurat, welches eingesetzt werden kann, ist beispielsweise das Verkaufsprodukt Anox 1C-14 der Fa. EniChem Synthesis.

Ein (1,3,5-Trimethyl-2,4,6-tris(3,5-di-t-butyl-4-hydroxybenzyl)benzol, welches eingesetzt werde kann, ist beispielsweise Irganox 1330 der Fa. Ciba-Geigy.

Ein butyliertes Reaktionsprodukt aus p-Kresol und Dicyclopentadien mit einem durchschnittlichen Molekulargewicht von 600 - 700 g/mol, welches eingesetzt werden kann, ist beispielsweise Wingstay L der Fa. Goodyear Tire & Rubber Company.

Gebräuchliche sekundäre Antioxidantien sind beispielsweise Tris(2,4-di-t-butyl-phenyl)phosphit, Bis-(2,4-di-t-butyl-phenyl)-pentaerythrityl-diphosphit und Tetrakis-(2,4-di-t-butyl-phenyl)-4,4'-biphenylylendiphosphonit.

Ein Tris(2,4-di-t-butyl-phenyl)phosphit, welches eingesetzt werden kann, ist beispielsweise das Verkaufsprodukt Alkanox 240 der Fa. EniChem Synthesis oder Irgafos 168 der Fa. Ciba-Geigy.

Ein Bis-(2,4-di-t-butyl-phenyl)-pentaerythrityl-diphosphit, welches eingesetzt werden kann, ist beispielsweise das Verkaufsprodukt Ultranox 626 der Fa. General Electric.

Ein Tetrakis-(2,4-di-t-butyl-phenyl)-4,4'-biphenylylendiphosphonit, welches eingesetzt werden kann, ist beispielsweise das Verkaufsprodukt Sandostab PEPQ der Fa. Sandoz.

Gebräuchliche Thioester sind beispielsweise Dilaury-3,3'-thiodipropionat (Irganox PS 800 von Fa. Ciba-Geigy) und Distearylthiodipropionat (DSTP, Irganox PS 802 von Fa. Ciba-Geigy).

Gebräuchliche Säurefänger sind zum Beispiel Stearate, insbesondere des Calciums, Zinks, Magnesiums oder Aluminiums; Oxide, insbesondere Zinkoxid oder Magnesiumoxid oder Titanoxid; synthetische oder natürliche Carbonate, beispielsweise Calciumcarbonat oder Hydrotalcit.

Die genannten Verbindungen sind dem Fachmann bekannt und frei verkäuflich. So kann beispielsweise Hydrotalcit, eine Verbindung der Formel Mg₆Al₂(OH)₁₆(CO₃).4H₂O, von Fa. Kyowa unter dem Handelsnamen DHT4A bezogen werden.

Gebräuchliche Lichtschutz-Additive sind beispielsweise 2(2'-Hydroxy-3'-t-butyl-5'-methylphenyl)-5-chlorobenzotriazol und 2-Hydroxy-4-octylbenzophenon.

Ein 2(2'-Hydroxy-3'-t-butyl-5'methylphenyl)-5-chlorobenzotriazol, welches eingesetzt werden kann, ist beispielsweise Uvazol 236 der Fa. EniChem Synthesis oder Tinuvin 326 der Fa. Ciba-Geigy. Als 2-Hydroxy-4-octyloxybenzophenon ist Chimassorb 81 der Fa. Ciba-Geigy einsetzbar.

Andere gebräuchliche Lichtschutz-Additive sind sterisch gehinderte Additive wie Bis(2,2,6,6-tetramethyl-4-piperidyl)sebacat und Poly-(N-β-hydroxyethyl)2,2,-6,6-tetramethyl-4-hydroxy-piperidyl-succinat.

Als Bis(2,2,6,6-tetramethyl-4-piperidyl)sebacat kann Uvaseb 770 der Fa. EniChem Synthesis oder Tinuvin 770 der Fa. Ciba-Geigy eingesetzt werden.

Als Poly-(N-β-hydroxyethyl)-2,2,6,6-tetramethyl-4-hydroxy-piperidyl-succinat ist Tinuvin 622 der Fa. Ciba-Geigy einsetzbar.

Bei K2 kann es sich aber auch beispielsweise um Wachse, Oligomere oder Polymere, wie zum Beispiel Ethylen-Propylen-Dien-Monomer-Kautschuke (EPDM) oder Styrol-Butadien-Blockcopolymere, handeln, sofern deren Temperatur T_{S}^{K2} weit unterhalb, beispielsweise ca. 50°C unterhalb, der Temperatur T_{W}^{K1} liegt, die den Warmformbereich der thermoplastischen Komponente nach unten begrenzt, beispielsweise ca. 110°C, bzw. deren Temperatur T_{S}^{K2} ca. 50 bis 350°C unter der Verarbeitungstemperatur von K1 liegt, bzw. deren Temperatur T_{S}^{K2} im Bereich oder nur wenig oberhalb der Umgebungstemperatur der Verarbeitungsmaschinen liegt, beispielsweise zwischen ca. Raumtemperatur und 60°C.

Bei K2 kann es sich aber beispielsweise auch um niedrigschmelzende oder thermisch empfindliche Wirkstoffe, beispielsweise pharmazeutische Wirkstoffe, Enzyme oder Vitamine handeln, die beispielsweise in die bereits beschriebene, als polymere Bindemittel wirkende Komponente K1 eingearbeitet und durch Schmelzextrusion zu Tabletten oder ähnlichen Darreichungsformen weiterverarbeitet werden können.

Die genannten Komponenten K2 weisen in der Regel eine definierte Schmelztemperatur T_{S}^{K2} auf. Es ist jedoch auch möglich, besonders wenn K2 eine Mischung mehrerer Stoffe ist, daß anstelle einer definierten Schmelztemperatur ein Temperaturbereich existiert, innerhalb dessen beim Erwärmen von K2 ein Übergang von der festen Phase in eine flüssige, plastische, verformbare, viskose oder fließfähige Phase erfolgt. In diesen Fällen ist erfindungsgemäß unter T_{S}^{K2} der Temperaturbereich zu verstehen, innerhalb dessen der genannte Übergang stattfindet. Bei Mischungen verschiedener Stoffe entspricht T_{S}^{K2} oft dem Schmelzpunkt der niedrigstschmelzenden Verbindung.

Es ist auch möglich, daß T_{S}^{K2} nicht die Schmelztemperatur der Komponente K2 ist, sondern die Temperatur, bei der die thermische Zersetzung der Komponente K2 so groß wird, daß ihre Funktion beeinträchtigt wird, beispielsweise bei pharmazeutischen Wirkstoffen, oder die erfindungsgemäßen Additivbatches oder thermoplastisch verarbeitbaren Formmassen in ihrer Qualität negativ beeinflußt werden, beispielsweise durch Verfärbung.

Bei den erfindungsgemäßen Verfahren zur Herstellung von thermoplastischen Formmassen können in der Regel 80 bis 99,99 Gew.-% K1 und 0,01 bis 20 Gew.-% K2, bevorzugt 90 bis 99,99 Gew.-% K1 und 0,01 bis 10 Gew.-% K2, besonders bevorzugt 95 bis 99,9 Gew.-% K1 und 0,1 bis 5 Gew.-% K2 und insbesondere 97 bis 99,9 Gew.-% K1 und 0,1 bis 3 Gew.-% K2 eingesetzt werden, wobei die Gew.-% jeweils auf die Gesamtmasse von K1 und K2 bezogen sind.

Falls die erfindungsgemäßen Verfahren zur Herstellung von Additivbatches eingesetzt werden, liegen die Gehalte an K2 in der Regel deutlich höher. Für die Herstellung von Additivbatches werden üblicherweise 30 bis 99 Gew.-% K1 und 1 bis 70 Gew.-% K2, bevorzugt 40 bis 99 Gew.-% K1 und 1 bis 60 Gew.-% K2, besonders bevorzugt 50 bis 98 Gew.-% K1 und 2 bis 50 Gew.-% K2 und insbesondere 55 bis 95 Gew.-% K1 und 5 bis 45 Gew.-% K2 eingesetzt, wobei die Gew.-% jeweils auf die Gesamtmasse von K1 und K2 bezogen sind.

Weiterhin können bei den erfindungsgemäßen Verfahren, bevorzugt bei den erfindungsgemäßen Verfahren zur Herstellung von thermoplastischen Formmassen, die Komponenten K1 und/oder K2 bei der Polymerverarbeitung übliche Additive und Hilfsmittel oder aber auch Elastomere, beispielsweise Schlagzähmodifier, enthalten, die nicht unter die Definition von K2 fallen. Additivbatches werden in der Regel nicht mit weiteren Additiven, die nicht unter die Definition von K2 fallen, versehen. Dies erübrigt sich meist deshalb, da bei der Herstellung einer thermoplastischen Formmasse unter Verwendung von Additivbatches in diesem Verarbeitungsschritt ggf. gewünschte weitere Additive eingearbeitet werden können. Aus diesem Grund enthalten Additivbatches selbst beispielsweise nur dann weitere Additive, die nicht unter die Definition von K2 fallen, wenn die Additivbatches selbst z.B. gegen UV-Licht oder Temperatureinflüsse stabilisiert werden müssen.

In den nach den erfindungsgemäßen Verfahren hergestellten thermoplastischen Formmassen beträgt der Anteil an Additiven und Hilfsmitteln, die nicht unter die Definition von K2 fallen, bezogen auf die Gesamtheit aller eingesetzten Stoffe, in der Regel von 0 bis zu 60, vorzugsweise bis zu 30 Gew.-%. Die jeweils tatsächlich eingesetzte Menge an Additiven oder Hilfsmitteln ist stark abhängig von Art und Funktion des Additivs oder Hilfsmittels.

Übliche Additive und Hilfsmittel, die nicht unter die Definition von K2 fallen, können beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente, Weichmacher, Antistatika, Flammschutzmittel sowie faser- oder teilchenförmige Füll- bzw. Verstärkungsstoffe sein, deren Schmelztemperatur T_{S} nicht um die bei der Definition von K2 genannten Beträge unter T_{W}^{K1} liegen. Im folgenden werden beispielhaft einige dieser Additive und Hilfsmittel genannt.

Oxidationsverzögerer und Wärmestabilisatoren, die im erfindungsgemäßen Verfahren, bevorzugt zur Herstellung thermoplastisch verarbeitbarer Formmassen, zugesetzt werden können, sind z.B. sterisch gehinderte Phenole, Hydrochinone, Phosphite und Abkömmlinge und substituierte Vertreter dieser Gruppe und Mischungen dieser Verbindungen, vorzugsweise in Mengen bis zu 5 Gew.-%, bezogen auf das Gesamtgewicht aller Komponenten der erfindungsgemäßen Formmassen.

Beispiele für UV-Stabilisatoren sind substituierte Resorcine, Salicylate, Benzotriazole und Benzophenone, die man im allgemeinen in Mengen bis zu 1 Gew.-%, bezogen auf das Gesamtgewicht aller Komponenten der Formmassen, einsetzen kann. Gleit- und Entformungsmittel, die man in der Regel bis zu 1 Gew.-%, bezogen auf das Gesamtgewicht aller Komponenten der Formmassen, den Polymeren zusetzen kann, sind beispielsweise Stearinsäure, Stearylalkohol, Stearinsäurealkylester und -amide sowie Ester des Pentaerythrits mit langkettigen Fettsäuren. Geeignete Farbstoffe sind organische Farbstoffe wie Anthrachinonrot, organische Pigmente und Lacke wie Phthalocyaninblau, anorganische Pigmente wie Titandioxid und Cadmiumsulfid. Als Weichmacher seien Dioctylphthalat, Dibenzylphthalat und Butylbenzylphthalat genannt.

Als Flammschutzmittel kann man die üblichen Präparate oder Kombinationen davon einsetzen wie roten Phosphor, Phosphor-Verbindungen wie die Ester der Phosphorsäure, der phosphorigen Säure, von Phosphon- und Phosphinsäure sowie tertiäre Phosphine und Phosphinoxide, beispielsweise Triphenylphosphinoxid, halogenierte organische und anorganische Verbindungen wie Tetrabrom-bisphenol-A-polycarbonat, Metalloxide wie Antimontrioxid, Fluor-Verbindungen wie Polytetrafluorethylen sowie weitere an sich bekannte Flammschutzmittel.

Als verstärkend wirkende Füllstoffe seien beispielsweise Kaliumtitanat-Whisker, Kohlenstoff- und vorzugsweise Glasfasern genannt. Die verwendeten Glasfasern können aus E-, A- oder C-Glas sein und sind vorzugsweise mit einer Schlichte und einem Haftvermittler ausgerüstet. Ihr Durchmesser beträgt in der Regel 5 bis 100 µm, bevorzugt 6 bis 20 µm. Nach ihrer Einarbeitung weisen die faserförmigen Füllstoffe vorzugsweise eine mittlere Länge von 0,05 bis 10 mm, insbesondere 0,1 bis 6 mm, besonders bevorzugt 0,3 bis 6 mm, auf. Man kann aber auch Endlosfasern (rovings) verwenden.

Andere geeignete Füllstoffe sind beispielsweise Glaskugeln, Wollastonit, Calciumcarbonat, Quarzmehl, Silicium- und Bornitrid, Mineralfasern, Aluminiumoxidfasern und Glimmer. Ferner seien Metallflocken (z.B. Aluminiumflocken K 102 der Fa. Transmet. Corp.), Metallpulver, Metallfasern, metallbeschichtete Füllstoffe (z.B. nickelbeschichtete Glasfasern) sowie andere Zuschlagstoffe, die elektromagnetische Wellen abschirmen können, genannt, wobei die Aluminiumflocken K 102 der Fa. Transmet. Corp. bevorzugt sind. Besonders bevorzugt sind Mischungen ausgewählt aus der Gruppe bestehend aus Aluminiumflocken, Kohlenstoffasern, Leitfähigkeitsruß und nickelbeschichteten C-Glasfasern.

Als Schlagzähmodifier kann man beispielsweise elastische Polymere wie Naturkautschuk, Polybutadien, Ethylen-Propylen-Kautschuke, Polyorganosiloxane ("Siliconkautschuke"), Polyisopren, Copolymere aus Butadien, Styrol und Acrylnitril, Polyethylacrylat, Polybutylacrylat, Polyethylhexylacrylat sowie Copolymere von Acrylestern mit Butadien oder Acrylaten, Styrol, Acrylnitril und Vinylethern einsetzen.

Die Herstellung solcher Schlagzähmodifier ist dem Fachmann bekannt.

Den Anteil an Schlagzähmodifier bezogen auf das Gesamtgewicht aller Komponenten der Formmassen wählt man in der Regel im Bereich von 5 bis 95, bevorzugt von 10 bis 50 Gew.-%.

Je nach Wahl der Komponente K1, d.h. abhängig von der Temperatur T_{W}^{K1} der jeweils eingesetzten thermoplastischen Komponente, kann ein bestimmtes Additiv entweder unter die Definition von K2 fallen (beispielsweise wenn das Additiv einen Schmelzpunkt von 60°C und K1 eine Erweichungstemperatur von 150°C hat) oder auch nicht (beispielsweise wenn das gleiche Additiv einen Schmelzpunkt von 60°C und K1 eine Erweichungstemperatur von 70°C hat).

Nach dem erfindungsgemäßen Verfahren lassen sich thermoplastisch verarbeitbare Formmassen, insbesondere Additivbatches, aus K1 und K2 herstellen, wobei T_{S}^{K2} weit unterhalb, beispielsweise ca. 50°C unterhalb, der Temperatur T_{W}^{K1} liegt, die den Warmformbereich der thermoplastischen Komponente nach unten begrenzt, beispielsweise ca. 110°C, bzw. wobei T_{S}^{K2} ca. 50 bis 350°C unter der Verarbeitungstemperatur von K1 liegt, bzw. wobei T_{S}^{K2} im Bereich oder nur wenig oberhalb der Umgebungstemperatur der Verarbeitungsmaschinen liegt, beispielsweise zwischen ca. Raumtemperatur und 60°C.

Nach dem erfindungsgemäßen Verfahren wird K1 auf eine Temperatur größer als T_{W}^{K1} erwärmt, die Komponente K2 mittels einer auf eine Temperatur kleiner als T_{S}^{K2} gekühlten Dosiervorrichtung zudosiert, eine Vermischung der Komponenten K1 und K2 durchgeführt und die erhaltene thermoplastisch verarbeitbare Formmasse bzw. der Additivbatch nach einem optional durchführbaren Formgebungsprozeß wieder auf eine Temperatur kleiner als T_{W}^{K1} abgekühlt, wobei wesentlich ist, daß K2 zum überwiegenden Anteil erst nach dem Kontakt mit K1 schmilzt.

Geeignete Dosiervorrichtungen und Kühlvorrichtungen für K2 sowie geeignete Mischvorrichtungen und Formgebungsvorrichtungen für die Formmassen aus K1 und K2 wurden bereits bei der Beschreibung der erfindungsgemäßen Mischvorrichtungen genannt.

In einer bevorzugten Ausführungsform der erfindungsgemäßen Verfahren werden die thermoplastisch verarbeitbaren Formmassen bzw. die Additivbatches aus K1 und K2 unter Verwendung der beschriebenen erfindungsgemäßen Mischvorrichtungen hergestellt.

Besonders bevorzugt sind Verfahren, bei denen die Komponente K1 in einer Schneckenmaschine S1 in eine plastisch verformbare oder schmelzflüssige Form gebracht wird und die Komponente K2 mit Hilfe der Schneckenmaschine S2 in überwiegend fester Form in die plastisch verformbare oder flüssige Komponente K1 dosiert wird. In S1 wird dabei die Mischung der Komponenten durchgeführt, gefolgt von einem optionalen Formgebungsprozeß wie beschrieben. Mögliche Ausführungsformen der Schneckenmaschinen wurden beschrieben.

Bei einem bevorzugten erfindungsgemäßen Verfahren wird K1 in die Dosierzone eines Hauptextruders dosiert, wobei der Hauptextruder eine mittels Wasserkühlung auf ca. Raumtemperatur gekühlte Dosierzone und auf 150°C bis 400°C beheizte Plastifizier-, Homogenisier- und Ausstoßzonen aufweist und mit einer mit 50 U/min bis 1200 U/min gleichsinnig rotierenden Doppelschnecke bestückt ist. Die Doppelschnecke des Hauptextruders ist zweigängig ausgeführt und in der Dosier- und Ausstoßzone mit normal-fördernden, in der Plastifizier- und Homogenisierzone mit Misch-, Knet- oder Scherelementen versehen. Bevorzugt im Bereich der Homogenisierzone des Hauptextruders ist ein Seitenextruder mit seiner Austrittsöffnung an den Schneckenzylinder des Hauptextruders angeschlossen. In die Dosierzone des Seitenextruders wird K2 dosiert. Die Verbindung des Seitenextruders und des Hauptextruders erfolgt durch einen Übergabestutzen, der mit einer bis zur Innenwandung des Schnekkenzylinders des Hauptextruders wirkenden Wasserkühlung versehen ist, so daß der Übergabestutzen 50°C bis 350°C kälter ist als die Innenwandung des Schneckenzylinders des Hauptextruders im Bereich der Verbindungsstelle, d.h., daß der Übergabestutzen so kalt ist, daß K2 zum überwiegenden Anteil erst nach dem Kontakt mit K1 schmilzt. Der Seitenextruder ist bevorzugt vollständig wassergekühlt, beispielsweise auf Raumtemperatur. Der Seitenextruder ist vorteilhaft mit einer mit 50 U/min bis 1200 U/min gleichsinnig rotierenden Doppelschnecke bestückt. Bevorzugt ist die Doppelschnecke des Seitenextruders im Übergang zum Hauptextruder eingängig, in den anderen Bereichen zweigängig, ausgeführt und mit normal-fördernden Schneckenelementen versehenen, so daß im Übergang vom Seiten- zum Hauptextruder ein Druck aufgebaut wird, der genügend hoch ist, um gegen den Druck des Hauptextruders zu fördern. Das Verfahren ist so ausgeführt, daß K2 im wesentlichen in fester Form in die aufgeschmolzene bzw. erweichte Komponente K1 eingebracht wird, d.h. der überwiegende Anteil von K2 schmilzt bzw. erweicht erst nach dem Kontakt mit K1. Nach Mischung der Komponenten K1 und K2 wird die thermoplastisch verarbeitbare Formmasse durch die Austrittsöffnung des Hauptextruders ausgestoßen, gegebenenfalls einem Formgebungsprozeß unterzogen, bevorzugt wird granuliert, und abgekühlt.

In einer Abwandlung dieser Ausführungsformen können den Komponenten K1 und/oder K2 auch die genannten bei der Polymerverarbeitung üblichen Additive oder Hilfsmittel oder beispielsweise Elastomere zugegeben werden, die nicht unter die Definition von K2 fallen, oder die genannten Additive oder Hilfsmittel oder Elastomere getrennt dosiert werden. Auch K1 und K2 können an mehr als einer Dosierstelle zugegeben werden, wie bei der Beschreibung der erfindungsgemäßen Mischvorrichtung dargelegt.

Bevorzugt werden mit dem erfindungsgemäßen Verfahren Additivbatches hergestellt.

In diesem Fall besteht die Polymermatrix K1 üblicherweise aus dem gleichen Material wie der zu additivierende Thermoplast oder ist mit diesem zumindest verträglich. Beispielsweise können Stabilisatoren K2 für zu stabilisierende Acrylnitril-Butadien-Styrol-(ABS), Acrylester-Styrol-Acrylnitril- (ASA) oder Styrol-Acrylnitril-Copolymere (SAN) sinnvollerweise in SAN-Copolymer eingearbeitet werden. Soll Polystyrol (PS) oder dessen Blends additiviert werden, eignet sich als Polymermatrix K1 für den Additivbatch PS.

Der Gewichtsanteil der Additive an den Additivbatches richtet sich nach der Art der Stoffe und der gewünschten Anwendung; er kann beispielsweise bei Pigmenten bis zu 60 Gew.-%, bezogen auf die Summe der Gewichte von Polymermatrix K1 und Additiv, betragen. Werden niedrigschmelzende Additive K2 verwendet, insbesondere Additive, deren Schmelztemperatur nur wenig über Raumtemperatur liegt, beträgt der Gewichtsanteil dieser Additive K2 am Additivbatch meist bis 40 Gew.-%, bezogen auf die Summe der Gewichte von Polymermatrix K1 und Additiv K2. Meist richtet sich der Gewichtsanteil von K2 nach der Aufnahmefähigkeit des Matrixmaterials K1; der erhaltene Additivbatch muß noch verarbeitbar sein.

Mit Hilfe der erfindungsgemäßen Mischvorrichtungen und/oder Verfahren sind homogene thermoplastisch verarbeitbare Formmassen, insbesondere Additivbatches, aus mindestens einer thermoplastischen Komponente K1 und mindestens einer weiteren Komponente K2 herstellbar, wobei die Schmelz- oder Zersetzungstemperatur T_{S}^{K2} der weiteren Komponente weit unterhalb, beispielsweise ca. 50°C unterhalb, der Temperatur T_{W}^{K1} liegt, die den Warmformbereich der thermoplastischen Komponente nach unten begrenzt, beispielsweise ca. 110°C, bzw. wobei T_{S}^{K2} ca. 50 bis 350°C unter der Verarbeitungstemperatur von K1 liegt, bzw. wobei T_{S}^{K2} im Bereich oder nur wenig oberhalb der Umgebungstemperatur der Verarbeitungsmaschinen liegt, beispielsweise zwischen ca. Raumtemperatur und 60°C, ohne daß aufgrund vorzeitigen Aufschmelzens von K2 Probleme bezüglich Verklebung oder Verbackung bei der Dosierung, bezüglich des zum Dosieren von K2 nötigen Druckaufbaus, bezüglich der Vermischung der einzelnen Komponenten oder bezüglich Zersetzung oder Verfärbung von K2 auftreten, oder Inhomogenitäten in den thermoplastisch verarbeitbaren Formmassen, insbesondere den Additivbatches, auftreten.

Die Additivbatches sind hervorragend zur Additivierung, und damit zur Herstellung homogener thermoplastisch verarbeitbarer Formmassen, geeignet.

Die unter Verwendung der Formmassen und/oder der Additivbatches hergestellten Folien, Fasern oder Formkörper zeichnen sich durch eine sehr gute Homogenität aus.

### Beispiele:

### Untersuchungsmethoden:

Die viskosiätszahl (VZ [ml/g]) des SAN wurde nach DIN 53 726 an 0,5 gew-% iger Lösung in Dimethylformamid bei 25°C bestimmt.

Die Fließfähigkeit (MVI [ml/10 min]) des SAN wurde nach ISO 1133 B bei 220°C und einer Belastung von 10 kg bestimmt.

Die Schmelztemperaturen der Additive wurden anhand von DSC-Messungen bei einer Aufheiz- bzw. Abkühlrate von 20 K/min während des ersten Abkühlzyklus bestimmt (Verbindung A3) oder den Herstellerangaben entnommen (Verbindung A2).

### Einsatzstoffe:

### Komponente K1:

A1) SAN aus 73 Gew.-% Styrol und 27 Gew.-% Acrylnitril mit einer Viskositätszahl VZ von 65 ml/g und einer Fließfähigkeit MVR von 52 ml/10 min. T_{W}^{K1}
für dieses Polymer ist ca. 130°C, die übliche Verarbeitungstemperatur für dieses Polymer beträgt ca. 160-300°C.

### Komponente K2:

A2) Dilauryl-3,3'-thiodipropionat (Irganox PS 800 von Ciba-Geigy) mit einem Schmelzbereich von 38-40°C.

### Weiteres Additiv:

A3) 1,1,3-Tri(2'-methyl-4'-hydroxy-5'-tert.-butylphenyl)butan (Lowinox CA von Great Lakes Inc.) mit einer Schmelztemperatur von 181°C.

### Mischvorrichtung:

### Hauptextruder B1)

Es wurde ein Zweischneckenextruder ZSK 40 der Fa. Werner und Pfleiderer, bestehend aus 8 Gehäuseschüssen (die Zählung der Gehäuseschüsse beginnt bei 1, der Dosierzone, und setzt sich in Förderrichtung bis 8, der Ausstoßzone, fort) und einem dazu gehörenden Schneckenpaar, verwendet. Der Außendurchmesser der Schnekken betrug 40 mm, die Gehäuseschußlänge jeweils 140 mm. In den auf ca. 28°C wassergekühlten Gehäuseschuß 1, der mit einer obenliegenden Dosieröffnung versehen war, wurde A1 und A3 dosiert. Die Gehäuseschüsse 2 bis 8 wurden auf 160 bis 180°C beheizt. Gehäuseschuß 4 war mit einer seitlichen Anschlußöffnung für einen Seitenextruder B2) versehen. Die Schnecken waren in den Gehäuseschüssen 1 und 2 mit neutral-fördernden Elementen, im Gehäuseschuß 3 mit neutral-fördernden Elementen und Knetblöcken und in den Gehäuseschüssen 4 bis 8 mit Zahnmischelementen sowie fördernden und nicht-fördernden Knetblöcken versehen. Die Drehzahl der gleichläufig rotierenden, zweigängig ausgeführten Doppelschnecke betrug 440 U/min. Der Austrag erfolgte über eine Düsenplatte.

### Seitenextruder B2)

Es wurde ein Zweischneckenextruder ZSK 25 der Fa. Werner und Pfleiderer, bestehend aus 6 Gehäuseschüssen (die Zählung der Gehäuseschüsse beginnt bei 1, der Entlüftungszone, und setzt sich in Förderrichtung bis 6, der Verbindung zum Hauptextruder, fort) und einem dazu gehörenden Schneckenpaar, verwendet. Der Außendurchmesser der Schnecken betrug 25 mm, die Gehäuseschußlänge jeweils 100 mm. Die Gehäuseschüsse 1 bis 6 wurden mit Wasser auf ca. 28°C gekühlt. Gehäuseschuß 1 besaß eine oben-liegende Entlüftungsöffnung. An Gehäuseschuß 2 war seitlich ein Zweischneckenbeschicker zur Dosierung von A2 angebracht. Gehäuseschuß 6 mündete in einen mit Wasser auf 28°C gekühlten Übergabestutzen. Dieser Übergabestutzen war an Gehäuseschuß 4 des Hauptextruders B1) angeschlossen. Die Schnecken des Seitenextruders waren in allen Gehäuseschüssen und im Übergabestutzen mit neutral-fördernden Elementen versehen und in den Gehäuseschüssen 1 bis 5 zweigängig, im Gehäuseschuß 6 und im Übergabestutzen eingängig ausgeführt. Die Drehzahl der gleichläufig rotierenden Doppelschnecke betrug 490 U/min.

In der erfindungsgemäßen Mischvorrichtung bestehend aus Hauptextruder B1) und mittels Übergabestutzen mit diesem verbundenen Seitenextruder B2) konnten nach dem erfindungsgemäßen Verfahren folgende Durchsätze (jeweils in kg/h) erreicht werden:

| | A1 | A2 | A3 | Gesamt |
|---|---|---|---|---|
| Versuch 1 | 42,5 | 5,0 | 2,5 | 50 |
| Versuch 2 | 63,75 | 7,5 | 3,75 | 75 |
| Versuch 3 | 68 | 8,00 | 4,0 | 80 |
| Versuch 4 | 85,0 | 10,0 | 5,0 | 100 |

In allen versuchen wurden glatte, optisch homogene (bestimmt durch Lichtmikroskopie bei 266-facher Vergrößerung), abziehbare Stränge erhalten.

### Vergleichsbeispiel:

Versuch V1: Wie bei Versuch 1 des oben angeführten erfindungsgemäßen Beispiels, jedoch ohne Kühlung des Übergabestutzens, wurde Versuch V1 durchgeführt. Es konnte nur eine unzureichende Mischung der Komponenten erreicht werden. Aus der Düse des Hauptextruders trat nicht eingemischte Komponente A2 aus. Der erhaltenen Strang war inhomogen. Das Produkt ließ sich nicht granulieren.

Die Beispiele belegen, daß sich mit Hilfe der erfindungsgemäßen Mischvorrichtungen und/oder Verfahren homogene Additivbatches aus einer thermoplastischen Komponente, einer hochschmelzenden Additivkomponente und einer weiteren Komponente K2 herstellen lassen, wobei die Schmelz- oder Zersetzungstemperatur der weiteren Komponente weit unterhalb der Temperatur liegt, die den Warmformbereich der thermoplastischen Komponente nach unten begrenzt, ohne daß aufgrund vorzeitigen Aufschmelzens von K2 Probleme bezüglich Verklebung oder Verbackung bei der Dosierung, bezüglich des zum Dosieren von K2 nötigen Druckaufbaus, bezüglich der Vermischung der einzelnen Komponenten oder bezüglich Zersetzung oder Verfärbung von K2 auftraten, oder Inhomogenitäten in den Additivbatches auftraten.

Die erhaltenen Additivbatches waren homogen und ohne Staub-, verbackungs-, Verklebungs- oder Abriebsbildung zur Additivierung von Polymeren einsetzbar.

## Patentansprüche

1. Mischvorrichtung mindestens bestehend aus einer Schneckenmaschine S1 und einer Schneckenmaschine S2, wobei S1 wenigstens in der Plastifizier- und Homogenisierzone mit Heizeinrichtungen versehenen ist und wobei die Austrittsöffnung von S2 in der Plastifizier- oder Homogenisierzone von S1 mit dem Schneckenzylinder von S1 verbunden ist, **dadurch gekennzeichnet, daß** die Verbindung von S1 und S2 durch eine Verbindungsvorrichtung erfolgt, die mit einer bis zur Innenwandung des Schneckenzylinders von S1 wirkenden Kühleinrichtung versehen ist und daß die Schnecke von S2 im Übergang von S2 zu S1 einen genügend hohen Druck aufbauen kann, um gegen den Druck von S1 zu fördern.

2. Mischvorrichtung gemäß Anspruch 1, **dadurch gekennzeichnet, daß** die Verbindungsvorrichtung ca. 50°C bis 350°C kälter ist als die Innenwandung des Schneckenzylinders von S1 im Bereich der Verbindungsstelle.

3. Mischvorrichtung gemäß Ansprüchen 1 bis 2, **dadurch gekennzeichnet, daß** die Verbindungsvorrichtung eine Temperatur von nicht mehr als ca. 60°C aufweist, und die Innenwandung des Schneckenzylinders von S1 im Bereich der Verbindungsstelle eine Temperatur von mehr als ca. 110°C aufweist.

4. Mischvorrichtung gemäß Ansprüchen 1 bis 3, **dadurch gekennzeichnet, daß** die Schnecke von S2 im Übergang von S2 zu S1 eingängig und/oder mit enger werdenden Schneckengängen versehen ist.

5. Verwendung einer Mischvorrichtung gemäß den Ansprüchen 1 bis 4 zur Herstellung thermoplastisch verarbeitbarer Formmassen.

6. Verwendung gemäß Anspruch 5, zur Herstellung von Additivbatches.

7. Verfahren zur Herstellung thermoplastisch verarbeitbarer Formmassen aus mindestens einer thermoplastischen Komponente K1 und mindestens einer Komponente K2, wobei die Schmelz- oder Zersetzungstemperatur T_{S}^{K2} von K2 mindestens ca. 50°C niedriger ist als die Temperatur T_{W}^{K1}, die den Warmformbereich von K1 nach unten begrenzt, bei dem K1 auf eine Temperatur größer als T_{W}^{K1} erwärmt wird, die Komponente K2 mittels einer auf eine Temperatur kleiner als T_{S}^{K2} gekühlten Dosiervorrichtung zudosiert wird, eine Vermischung der Komponenten K1 und K2 erfolgt und die erhaltene thermoplastisch verarbeitbare Formmasse nach einem optional durchführbaren Formgebungsprozeß wieder auf eine Temperatur kleiner als T_{W}^{K1} abgekühlt wird, **dadurch gekennzeichnet, daß** K2 zum überwiegenden Anteil erst nach dem Kontakt mit K1 schmilzt.

8. Verfahren wach Anspruch 7, bei dem T_{S}^{K2} ca. 50 bis 350°C unter der Verarbeitungstemperatur von K1 liegt.

9. Verfahren nach Ansprüchen 7 bis 8, bei dem die Schmelz- oder Zersetzungstemperatur T_{S}^{K2} von K2 nicht mehr als ca. 60°C beträgt, und die Temperatur T_{W}^{K1}, die den Warmformbereich von K1 nach unten begrenzt, mehr als ca. 110°C beträgt.

10. Verfahren nach Ansprüchen 7 bis 9, zur Herstellung von Additivbatches.

11. Verfahren nach Ansprüchen 7 bis 10, bei dem in einer Mischvorrichtung gemäß Ansprüchen 1 bis 4 die Komponente K1 in einer Schneckenmaschine S1 auf eine Temperatur größer als T_{W}^{K1} erwärmt wird und die Komponente K2 mit Hilfe der Schneckenmaschine S2 in die Komponente K1 dosiert wird.

## Claims

1. A mixing apparatus at least composed of a screw-based machine S1 and a screw-based machine S2, where S1 has heating equipment, at least in the plasticizing and homogenizing zone, and where the outlet from S2 has been connected to the screw-containing barrel of S1, within the plasticizing or homogenizing zone of S1, wherein the connection between S1 and S2 is brought about by a connector which has cooling equipment effective as far as the inner wall of the screw-containing barrel of S1 and wherein the screw of S2 is capable of building up a pressure sufficiently high in the transition from S2 to S1 that conveying takes place against the pressure exerted by S1.

2. A mixing apparatus as claimed in claim 1, wherein the connector is colder, by from about 50°C to 350°C, than the inner wall of the screw-containing barrel of S1 in the region of the connecting point.

3. A mixing apparatus as claimed in claim 1 or 2, wherein the temperature of the connector is not above about 60°C and the temperature of the inner wall of the screw-containing barrel of S1 in the region of the connecting point is above about 110°C.

4. A mixing apparatus as claimed in any of claims 1 to 3, wherein along the transition from S2 to S1 the screw of S2 is single-flighted and/or has increasingly closely spaced flights.

5. The use of a mixing apparatus as claimed in any of claims 1 to 4 for preparing thermoplastically processable molding compositions.

6. The use as claimed in claim 5, for preparing additive masterbatches.

7. A process for preparing thermoplastically processable molding compositions from at least one thermoplastic component C1 and at least one component C2, where the melting point or decomposition temperature T_{M}^{C2} of C2 is lower, by at least about 50°C, than the temperature T_{H}^{C1}, which is the lower limit of the thermoforming range of C1, in which C1 is heated to a temperature above T_{H}^{C1}, component C2 is fed in by way of a feed unit which is cooled to below T_{M}^{C2}, mixing of components C1 and C2 takes place, and the resultant thermoplastically processable molding composition is again cooled to below T_{H}^{C1} after an optional shaping process, which comprises melting most of C2 only after contact with C1.

8. A process as claimed in claim 7, in which T_{M}^{C2} is lower, by from about 50 to 350°C, than the processing temperature of C1.

9. A process as claimed in claim 7 or 8, in which the melting point or decomposition temperature T_{M}^{C2} of C2 is not above about 60°C and T_{H}^{C1}, which is the lower limit of the thermoforming range of C1, is above about 110°C.

10. A process as claimed in any of claims 7 to 9, for preparing additive masterbatches.

11. A process as claimed in any of claims 7 to 10, in which, in a mixing apparatus as claimed in any of claims 1 to 4, component C1 is heated in a screw-based machine S1 to above T_{H}^{C1}, and component C2 is fed into component C1 with the aid of the screw-based machine S2.

## Revendications

1. Dispositif de mélange consistant en au moins une machine à vis sans fin S1 et une machine à vis sans fin S2, où S1 est équipée de dispositifs de chauffage au moins dans les zones de plastification et d'homogénéisation et où l'orifice de sortie de S2 dans la zone de plastification et d'homogénéisation de S1 est reliée au fourreau de vis sans fin de S2, **caractérisé en ce que** la liaison de S1 et S2 est réalisée par un dispositif de liaison muni d'un dispositif de refroidissement agissant jusqu'à la paroi intérieure du fourreau de vis sans fin de S1, et que la vis sans fin de S2 peut, à la transition de S2 vers S1, créer une pression suffisamment élevée pour assurer le transport contre la pression de S1.

2. Dispositif de mélange selon la revendication 1, **caractérisé en ce que** le dispositif de liaison est de 50°C à 350°C plus froid que la paroi intérieure du fourreau de vis sans fin de S1 dans la zone du site de liaison.

3. Dispositif de mélange selon les revendications 1 et 2, **caractérisé en ce que** le dispositif de mélange présente une température ne dépassant pas environ 60°C, et que la paroi intérieure du fourreau de vis sans fin de S1 présente, dans la zone du site de liaison, une température de plus d'environ 110°C.

4. Dispositif de mélange selon les revendications 1 à 3, **caractérisé en ce que** la vis sans fin de S2 est, dans la transition de S2 vers S1, à pas simples ou à pas se rétrécissant.

5. Utilisation d'un dispositif de mélange selon les revendications 1 à 4 pour la production de masses de moulage de traitement thermoplastique.

6. Utilisation selon la revendication 5 pour la préparation de lots d'additifs.

7. Procédé pour la production de masses de moulage de traitement thermoplastique constituées d'au moins un composant thermoplastique C1 et d'au moins un composant C2, la température de fusion ou de décomposition T_{S}^{C2} de C2 étant d'au moins environ 50°C inférieure à la température T_{W}^{C1}, qui limite vers le bas la plage de formage à chaud de C1, dans lequel C1 est chauffé à une température supérieure à T_{W}^{C1}, le composant C2 est ajouté via un dispositif de dosage refroidi à une température inférieure à T_{S}^{C2}, il se produit un mélange des composants C1 et C2 et la masse de moulage pour traitement thermoplastique obtenue est à nouveau refroidie à une température inférieure à T_{W}^{C1} après un processus de formage exécutable facultativement, **caractérisé en ce que** C2 ne fond en majeure partie qu'après le contact avec C1.

8. Procédé selon la revendication 7, dans lequel T_{S}^{C2} est d'environ 50°C à 350°C inférieure à la température de traitement de C1.

9. Procédé selon les revendications 7 à 8, dans lequel la température de fusion ou de décomposition T_{S}^{C2} de C2 n'est pas supérieure à environ 60°C, et la température T_{W}^{C1}, qui limite vers le bas la plage de formage à chaud de C1, est supérieure à 110°C.

10. Procédé selon les revendications 7 à 9, pour la production de lots d'additifs.

11. Procédé selon les revendications 7 à 10, dans lequel, dans un dispositif de mélange selon les revendications 1 à 4, le composant C1 est chauffé, dans une machine à vis sans fin S1, à une température supérieure à T_{W}^{C1} et le composant C2 est dosé dans le composant C1 à l'aide de la machine à vis sans fin S2.
